# EUROPÄISCHE PATENTSCHRIFT

(11) **EP 2 981 626 B1**
(45) Veröffentlichungstag und Bekanntmachung des Hinweises auf die Patenterteilung: **10.05.2017**
(21) Anmeldenummer: 14717092.2
(22) Anmeldetag: 06.03.2014
(51) Int. Cl.: C13K 1/02, C13K 13/00

(54) **VERFAHREN ZUM AUFSCHLUSS LIGNOCELLULOSISCHER BIOMASSE**
METHOD FOR BREAKING DOWN LIGNOCELLULOSIC BIOMASS
PROCÉDÉ DE DÉGRADATION DE BIOMASSE LIGNOCELLULOSIQUE

(30) Priorität: 12.03.2013 DE 102013102452
(43) Veröffentlichungstag der Anmeldung: 10.02.2016
(73) Patentinhaber: Studiengesellschaft Kohle mbH, 45470 Mülheim an der Ruhr (DE)
(72) Erfinder: KÄLDSTRÖM, Mats, 68570 Larsmo (FI); RINALDI, Roberto, 45468 Mülheim an der Ruhr (DE); MEINE, Niklas, 40223 Düsseldorf (DE); SCHÜTH, Ferdi, 45470 Mülheim an der Ruhr (DE)
(86) Internationale Anmeldenummer: PCT/DE2014/100080
(87) Internationale Veröffentlichungsnummer: WO 2014/139515

(56) Entgegenhaltungen:
- WO-A1-03/046227
- WO-A1-2011/002330
- GB-A- 2 036 826
- US-A- 5 730 837
- US-A1- 2010 200 182

## Beschreibung

Die vorliegende Erfindung betrifft ein Verfahren zum Aufschluss lignocellulosischer Biomasse, bei dem lignocellulosehaltigen Ausgangsmaterialien in Abbauprodukte abgebaut werden und aus den Abbauprodukten die wasserlöslichen Anteile in wässrige Lösung gebracht und die wasserunlöslichen Anteile, die im Wesentlichen aus Lignin bestehen, in ausgefällter Form abgetrennt werden.

Im Stand der Technik ist die Verwendung von Biomasse als Basismaterial für Brennstoffe und für chemische Grundstoffe seit langem Gegenstand von umfangreichen Untersuchungen. Cellulose und Lignin als Hauptkomponente von lignocellulosehaltigen Biomasse werden dabei als mögliches Rohmaterial angesehen. Um geeignete und bearbeitbare Produkte zu erhalten, muss die Lignocellulose in kleinere Moleküle aufgebrochen werden.

Eine Nutzung der Lignocellulose findet seit alters her zumeist in Form von Holz als Baustoff und Brennstoff statt. Der Celluloseanteil wird zur Papierherstellung verwendet. Lignin wird dabei in der Regel als Abfall- und Störstoff angesehen, der in der verwendeten Lignocellulose in möglichst geringer Menge vorliegen sollte. Im Stand der Technik wird teilweise versucht, Lignocellulose aus Getreide, Stroh, Schilfrohr, Holz, Papier und cellulosehaltigen Abfällen als nachwachsenden Rohstoff für unterschiedliche chemische Grundstoffe zu verwenden. Insbesondere die phenolartigen Verbindungen im Lignin gelten als möglicher Rohstoff für die stoffliche Verwertung.

Im Stand der Technik ist eine Vielzahl von Dokumenten bekannt, die sich mit der Nutzung von Biomasse beschäftigen. Zumeist handelt es sich dabei um Verfahren zur säurekatalysierten Hydrolyse von cellulosehaltiger Biomasse.
So offenbart US 2003/199049 die Imprägnierung von Biomasse mit einer verdünnten Säure, Trocknung und Hydrolyse unter Zuführung von Wasserdampf.

EP 0 081 678 A1 offenbart ebenfalls die Imprägnierung von Biomasse mit verdünnter Schwefelsäure, Entwässerung und Hydrolyse unter Zuführung von Wasserdampf.

DE 33 12 450 A1 offenbart die Imprägnierung eines cellulosehaitigen Materials mit verdünnter Säure, Trocknung des Materials und Hydrolyse. Das Material kann zwischen der Vor- und der Haupthydrolyse zerfasert werden.

Auch US 2010/126501 offenbart die säurekatalysierte Hydrolyse von Biomasse. Demgemäß werden Cellulosefasern in quasi-geschmolzenen Heteropolysäuren verarbeitet. Das Verhältnis zwischen faserigem Material zu Heteropolysäure beträgt überäquimolar 1:1-1:4, und die Reaktion wird bei Temperaturen von bis zu 120 °C durchgeführt. Das Substrat durchläuft eine Hydrolyse nach Suspendieren mit Cellulosefasern in den pseudo-geschmolzenen Heteropolysäuren.

WO 03/046227 offenbart ein Verfahren zur Behandlung einer Holzmasse mit einer verdünnten Säure in Lösung, wobei die mechanischen Kräfte zur Vorbehandlung des Holzes eingesetzt werden, um die Holzstruktur zu zerstören und anschließend das Substrat in der Zahnscheibenmühle zu verpressen, um den Wassergehalt im Material herabzusetzen und die Absorption der verdünnten Säure in das Innere der aufgebrochenen Holzstruktur zu erleichtern. Die Hydrolyse wird dabei nach Kontakt der Fasern mit Dampf bei Temperaturen von 160 °C durchgeführt.

GB 376 323 A betrifft ein Verfahren, wobei dort die Absorption eines organischen Lösungsmittels in einem Gewichtsverhältnis von 20-200 Gew.-% des Substrates, Überführen des so imprägnierten Substrates in eine rotierende Trommel und Zuführen von Chlorwasserstoffsäuredämpfen, um das Substrat zu zersetzen. Die gemäß diesem Verfahren erhaltenen Produkte sind in organischen Lösungsmitteln und in Wasser unlöslich.

Ferner offenbart US 4.292.089 die Suspension von Weizenstroh in einer 40 Gew.-%-igen Chlorwasserstoffsäurelösung in einem Rotationsverdampfer, wobei Chlorwasserstoffgas in die Suspension eingeleitet wird, so dass die Konzentration an Chlorwasserstoff im Bereich der Sättigung verbleibt. Gemäß dieser Behandlung wird das Weizenstroh in der konzentrierten Chlorwasserstofflösung solubilisiert und dabei werden keine mechanischen Kräfte zur Depolymerisierung des lignocellulosischen Substrats eingesetzt.

Die Nutzung von Lignocellulose als Rohstoff für Biokraftstoffe wird auch mit der Produktion von Bioethanol durchgeführt.

So betrifft die EP2468875 ein integriertes biotechnisches Verfahren, das Biobrennstoff und / oder Ausgangsmaterial für Biobrennstoff produziert und einen Mikroorganismus verwendet, der Enzyme enthält. Dabei werden Mikroorganismen kultiviert und ein Überstand oder eine mit Protein angereicherte Fraktion, die katalytisch aktive Enzym(e) umfassen, eingesetzt.

Ferner beschreibt die EP 2479821 ein Verfahren zur Behandlung von Lignocellulose-Material, das die Schritte umfasst: das Zerkleinern des Lignocellulose-Substrats, Mischen der erhaltenen Partikel mit Wasser und Dispergieren der Mischung mittels Kolloidmühle zu einer Suspension, Hochdruckhomogenisieren der Suspension, um Teilchen mit einem Teilchendurchmesser von 10-40 µm erhalten sowie Puffern der Suspension mit Natriumacetat und Essigsäure-Pufferlösung, und dann Zugabe der Enzyme Cellulase- und Xylanase-Glucosidase und Durchführen der Enzymolyse für 36-72 Stunden.

Die im Stand der Technik bekannten Verfahren zur Verarbeitung von Biomasse einschließlich der Gewinnung von Lignin aus lignocellulosischer Biomasse sind jedoch hinsichtlich Einfachheit der Verfahren und deren Ausbeuten verbesserungsfähig. Zumeist sind diese Verfahren apparativ und von den Verfahrensbedingungen aufwendig.

Der vorliegenden Erfindung lag daher die Aufgabe zugrunde, ein Verfahren bereitzustellen, mit dem auf einfache und effiziente Weise aus lignocellulosehaltigen Materialien Lignin und Abbauprodukte in hoher Ausbeute gewonnen werden können.

Unter Berücksichtigung der Erkenntnis, dass eine Vorbehandlung für die effiziente Umwandlung der Lignocellulose notwendig sein dürfte, haben die Erfinder herausgefunden, dass die mit einer katalytischen Menge einer starken Säure (z.B., HCl, H₂SO₄ und weiteren) durch eine in flüssiger oder gasförmiger Phase durchgeführte Tränkung der lignocellulosehaltigen Ausgangmaterialien, erfindungsgemäß auch als Imprägnierung bezeichnet, ein sehr wichtiger Schritt ist, um unter Einwirkung von mechanischen Kräften auf die mit Säure belegten und vorzugsweise getrockneten Ausgangsmaterialien Aufschlussprodukte zu erhalten, die einfach in wasserlösliche und wasserunlösliche Produkte aufgetrennt werden können.

Gegenstand der vorliegenden Erfindung ist demgemäß ein Verfahren zum Aufschluss lignocellulosischer Biomasse, bei dem in einem ersten Schritt lignocellulosehaltige Ausgangsmaterialien mit einer Säure in flüssiger oder gasförmiger Phase getränkt oder imprägniert werden, die mit Säure imprägnierten/belegten und vorzugsweise getrockneten Ausgangsmaterialien in einem zweiten Schritt unter Einwirkung von mechanischer Energie in Kontakt gebracht werden, wobei die lignocellulosehaltigen Materialien in einen wasserlöslichen Aufschlussrückstand umgewandelt werden, in einem dritten Schritt der Aufschlussrückstand in Wasser oder einem mit Wasser mischbaren Lösungsmittel gelöst wird und hydrolysiert wird. Dabei wird der Aufschlussrückstand in wasserlösliche Anteile und wasserunlösliche Anteile aufgetrennt.

Das erfindungsgemäße Verfahren wird in folgendem Schema 1 weiter veranschaulicht.

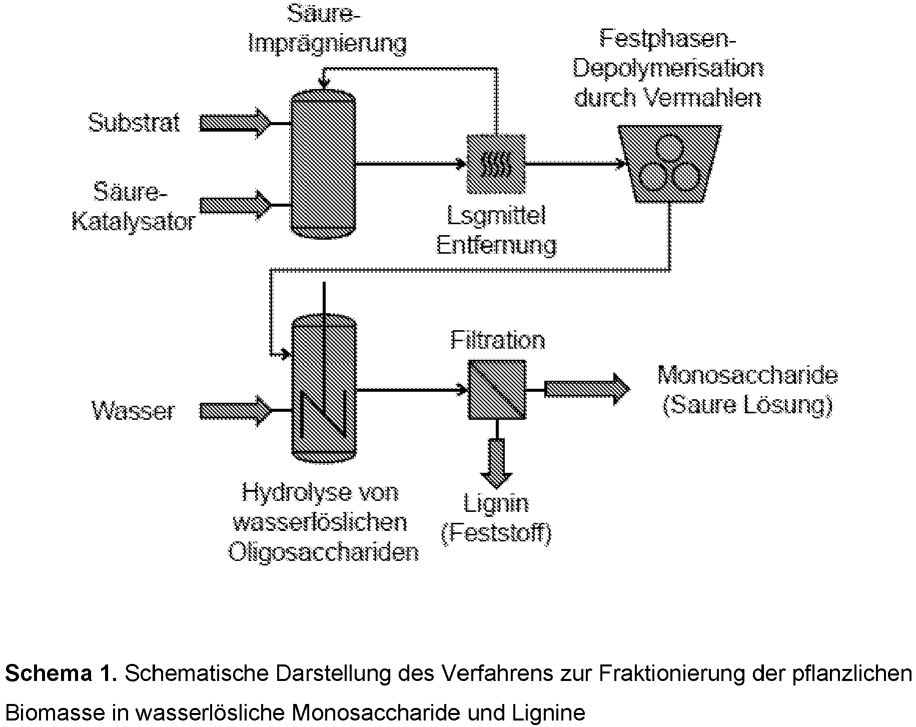

Das erfindungsgemäße Verfahren zum Aufschluss lignocellulosischer Biomasse umfasst in einem ersten Schritt das Behandeln der lignocellulosehaltigen Ausgangsmaterialien mit einer Säure, die in flüssiger oder gasförmiger Phase vorliegen kann und mit der die Ausgangsmaterialien getränkt oder imprägniert werden. Die so mit Säure imprägnierten/belegten und vorzugsweise getrockneten Ausgangsmaterialien werden in einem zweiten Schritt unter Einwirkung von mechanischer Energie in Kontakt gebracht, wobei die mechanische Behandlung mindestens solange durchgeführt wird, bis die Abbau- oder Spaltprodukte des lignocellulosischen Materials zu mehr als 60 Gew.-%, bevorzugt mehr als 70 Gew.-%, besonders mehr als 80 Gew.-%, ganz besonders mehr als 90 Gew.-%, bezogen auf das eingesetzte lignocellulosische Material wasserlöslich sind. Je nach Ausgangsmaterial und Menge kann diese mechanische Behandlung bis zu mehreren Stunden durchgeführt werden. Der gebildete Aufschlussrückstand wird in einem dritten Schritt in Wasser, in einem mit Wasser mischbaren Lösungsmittel oder Mischungen davon aufgenommen, und die erhaltene Dispersion oder Lösung wird auf eine Temperatur vom mehr als 40°C, besonders mehr als 60°C, ganz besonders mehr als 80°C und vorteilhaft mehr als 100°C, in einem Reaktor, der kontinuierlich betrieben werden kann, oder einem Autoklaven auf bis zu 200°C, besonders zwischen 100°C und 140°C über einen Zeitraum von bis zu 24 Stunden erhitzt.

Im einfachsten Fall wird der Aufschlussrückstand mit Wasser oder in einem mit Wasser mischbaren Lösungsmittel, wie Methanol, Ethanol, Aceton, das im Gemisch und auch als Gemisch mit bis zu 40 Gew.-% mit Wasser vorliegen kann, aufgenommen, und die wasserlöslichen Anteile in Lösung gebracht. Die Anteile, die im Wesentlichen aus Lignin bestehen, werden aus der Aufschlusslösung als wasserunlöslich ausgefällt, vorzugsweise durch Erhitzen der Aufschlusslösung, und in ausgefällter Form abgetrennt.

Die wasserlöslichen Anteile bestehen im Wesentlichen aus Kohlehydraten wie Cellobiose, Glucose und Xylose.

Dabei ist das lignocellulosische Material nicht auf bereits gereinigte Materialien beschränkt, selbst unbehandelte Naturprodukte wie Holz wie Fichtenholz, können mit Ausbeuten von mindestens 75 % bzw. 87 % nach 2 Stunden Vermahlung, Buchenholz oder Zuckerrohrbagasse sogar mit Ausbeuten über 99 % in wasserlösliche Produkte nach 2 Stunden Vermahlung umgewandelt werden.

Bei der Durchführung des erfindungsgemäßen Verfahrens wird eine Säure, ausgewählt aus anorganischen Säuren, organischen Säuren oder Mischungen davon, eingesetzt. Dabei wird die Säure im erfindungsgemäßen Verfahren in katalytischen Mengen eingesetzt. Vorzugsweise wird die Säure in einer Menge von 0,0001 bis 1 mmol, besonders 0,001 bis 1 mmol, ganz besonders 0,01 bis 1 mmol, jeweils pro g lignocellulosischen Materials eingesetzt.

Die Tränkung von den lignocellulosehaltigen Substraten mit einer starken Säure kann mit einer verdünnten sauren Lösung (0,0001 bis zu 6 mol/l) der Säure in einem Lösungsmittel mit einem niedrigen Siedepunkt (z.B., Dimethylether, Diethylether, Methylethylether, tert-Butylmethylether, Aceton, Pentan, Hexan, Heptan, superkritisches Kohlenstoffdioxid, Ethylacetat, Methylacetat, Methanol, Dichlormethan, u. w.) oder Mischungen davon durchgeführt werden, wobei das Lösungsmittel in einem nächsten Verfahrensschritt einfach entfernt werden kann, beispielsweise durch Anlegen eines Unterdruckes oder Zuführen von Wärme.

Um einen Verfahrensschritt zum Entfernen des Lösungsmittels vermeiden zu können, kann das Substrat alternativ mit einer gasförmigen Säure behandelt werden. In diesem Fall kann das lignocellulosische Material gasförmigem HCl, SO₃ oder anderen gasförmigen Säuren ausgesetzt werden. Falls gewünscht, kann aber auch eine Kombination der Tränkung mit der Imprägnierung auf gasförmigem Wege, auch mit verschiedenen Säuren, erfolgen

Besonders gute Umwandlungsergebnisse werden erhalten, wenn die anorganische Säure einen pKs-Wert < 3 aufweist, vorzugsweise liegt der pKs-Wert der Säure zwischen -14 und 2. Geeignete Beispiele für anorganische Säuren sind Mineralsäuren wie Schwefelsäure, Schwefeldioxid, Schwefeltrioxid, Salzsäure, Phosphorsäure, Phosphorwolframsäure und Salpetersäure, wobei Salpetersäure weniger bevorzugt ist.

Besonders gute Umwandlungsergebnisse werden auch erhalten, wenn die organische Säure einen pKs-Wert < 3 aufweist, vorzugsweise liegt der pKs-Wert der Säure zwischen -14 und 2. Geeignete Beispiele für organische Säuren sind Benzolsulfonsäuren und ihre Derivate, Halogenalkancarbonsäure, wie Trifluoressigsäure, oder Methansulfonsäure, Trifluoressigsäure und Oxalsäure und Derivate davon.

Es können auch Gemische der voranstehenden Säuren eingesetzt werden. Bevorzugt sind Säuren mit einem pKs-Wert kleiner als -2.

Zur Durchführung des erfindungsgemäßen Verfahrens hat es sich als bedeutsam erwiesen, dass die Säure nicht unmittelbar mit der Lignocellulose in Kontakt gebracht wird, sondern das lignocellulosische Material in einem ersten Verfahrensschritt mit einer Lösung der Säure in einem geeigneten Lösungsmittel und/oder mit einer gasförmigen Säure imprägniert wird. Sollte die Tränkung in einer Lösung stattfinden, sind solche Lösungsmittel oder Mischungen davon, die die Reaktion nicht negativ beeinflussen, geeignet, wie Wasser und organische Lösungsmittel wie Diethylether, Dichlormethan, Ethanol, Methanol, THF, Aceton, Benzol, leichtere Kohlenwasserstoffe (z.B., vier bis sieben kohlenstoffatomhaltige Kohlenwasserstoffen) und jedes andere polare oder unpolare Lösungsmittel, in welchem die eingesetzte Säure löslich ist, oder das eine gute Vermischung von Lignocellulose und Säure in einer Dispersion ermöglicht, und welches einen Siedepunkt von 100 °C und darunter hat. In diesem möglichen Verfahrensschritt wird die Lösung bzw. Dispersion der Säure mit dem cellulosehaltigen Material vermischt und gegebenenfalls für eine Zeit von bis zu einigen Stunden, besonders bis zu 2 Stunden, stehengelassen.

Vor der mechanischen Behandlung des lignocellulosischen Materials sollte das Lösungsmittel, beispielsweise durch Filtration und/oder Verdampfung, vorzugsweise wieder entfernt werden. Insbesondere, wenn als Lösungsmittel ein niedrigsiedendes Lösungsmittel mit einem Siedepunkt bei Normaldruck von 30 bis 80°C eingesetzt wird, kann dieses auf einfache Weise, entweder durch leichtes Erwärmen und/oder durch Anlegen eines Unterdrucks wieder entfernt werden. Die Säure, die üblicherweise einen höheren Siedepunkt hat, verbleibt auf dem lignocellulosischen Material. Anschließend kann die mechanische Behandlung des lignocellulosischen Materials in Gegenwart der Säure erfolgen. Es wurde festgestellt, dass der Umwandlungsgrad des lignocellulosischen Materials durch das Imprägnieren des lignocellulosischen Materials mit anorganischer und/oder organischer Säure in Gegenwart eines Lösungsmittels wesentlich gesteigert werden kann.

Nach der Entfernung des Lösungsmittels wird das mit Säure belegte und vorzugsweise getrocknete lignocellulosische Material eine Restfeuchtigkeit von weniger als 20 Gew.-%, besonders weniger als 16 Gew. %, bezogen auf das Gesamtgewicht des imprägnierten lignocellulosischen Materials, aufweisen. Vorzugsweise wird im weiteren Verfahren ein lignocellulosisches Material verwendet, das eine Restfeuchtigkeit im Bereich von 2 bis 10 Gew.-%, bezogen auf das Gesamtgewicht des imprägnierten lignocellulosischen Materials, aufweist, was, falls erforderlich, durch Trocknen erreicht werden kann.

Die mechanische Behandlung der mit Säure belegten und getrockneten lignocellulosischen Substrate kann beispielsweise durch Vermahlen, Extrudieren oder Kneten oder Beaufschlagung mit mechanischen Wellen hoher Energie wie Ultraschall, beispielsweise mit einer Ultraschallmühle erfolgen. Als Mühlen, die in ihrer Funktionsweise erfindungsgemäß nicht eingeschränkt sind, können auch solche eingesetzt werden, die unter Verwendung von Mahlkörpern das Mahlgut zerkleinern, wie z. B. Schwingmühlen, Rührwerksmühlen, Rührwerkskugelmühlen, Kugelmühlen usw, Hammermühlen, oder solche, in denen das zu zerkleinernde Material unter Ausnutzung von kinetischer Energie der Teilchen zerkleinert werden, wie z.B. Prallmühlen, Prallbrecher. Besonders bevorzugt sind Mühlen, die einen großtechnischen Einsatz ermöglichen, wie Hammermühlen, Rohrmühlen, aber auch Kugelmühlen. Als Extruder können alle aus dem Stand der Technik bekannte Extruder zur Anwendung kommen. Wird das erfindungsgemäße Verfahren in einer Kugelmühle, beispielsweise in einer Planetenkugelmühle, durchgeführt, so haben sich Drehzahlen von 400 bis 1.200, vorzugsweise 800 bis 1.000 U/min als geeignet erwiesen Die Drehzahl kann bei großtechnischen Anlagen auch niedriger sein, der Fachmann wird aber in Abhängigkeit von dem eingesetzten Material und der verwendeten Mühle die Drehzahl so festlegen können, dass ein optimiertes Ergebnis erzielt werden kann. Die Reaktionszeit, d. h. die Zeit, in welcher die mechanische Behandlung erfolgt, beträgt üblicherweise von 0,01 bis 24 Stunden, wobei Zeiträume von 1,5 bis 12, besonders 2 bis 6 Stunden ausreichend sind, um eine Mischung von Produkten mit einem Molekulargewicht niedriger als 2000 Da zu erzeugen, mit dem Ziel, eine vollständige oder zumindest hohe Ausbeute an wasserlöslichen Produkten zu gewinnen.

Die mechanische Behandlung wird erfindungsgemäß mindestens solange durchgeführt, bis die Abbau- oder Spaltprodukte des lignocellulosischen Materials zu mehr als 60 Gew.-%, bevorzugt mehr als 70 Gew.-%, besonders mehr als 80 Gew.-%, ganz besonders mehr als 90 Gew.-%, bezogen auf das eingesetzte lignocellulosische Material wasserlöslich sind. Dies wird in Abhängigkeit von der eingesetzten Vorrichtung zur mechanischen Behandlung, dem sauren Katalysator und der Menge des eingesetzten lignocellulosischen Materials in der Regel mit einer Behandlungsdauer von 2 bis 6 Stunden erreicht, wobei diese Verfahrensdauer vom Fachmann in Kenntnis der verwendeten Anlage und der eingesetzten lignocellulosischen Materialien bestimmt werden kann.

Wie oben festgehalten, können mit dem erfindungsgemäßen Verfahren nahezu quantitative Umwandlungen der Lignocellulosematerialien zu wasserlöslichen Produkten erreicht werden. Es werden wasserlösliche Cellulose-Oligomere, Cellobiose und weitere Produkte erhalten, wobei die Bildung von Nebenprodukten (z.B., 5-Hydroxymethylfurfural, Furfural, Levulinsäure, usw.) weitgehend vermieden werden kann.

Die erhaltenen Produkte, im Rahmen der Erfindung hier auch als Lignocellulose-Spaltprodukte bezeichnet, die, insbesondere nach Mahlen in einer Kugelmühle, in Pulverform vorliegen, werden in Wasser gelöst.

Die Erhitzung der wässrigen Lösung der erhaltenen Abbau- oder Spaltprodukte des cellulosehaltigen Materials bei einer Temperatur von mehr als 80°C, besonders zwischen 100° und 200°C, insbesondere von 120° bis 160°C, besonders zwischen 130° und 150°C, über einen Zeitraum von 0,005 bis 24 Stunden, besonders von 0,25 bis 12 Stunden, insbesondere von 2 bis 6 Stunden durchgeführt werden und dann die entstandenen festen Rückstände, im wesentlichen Lignin, durch Filtration abgetrennt werden.

Die erfindungsgemäße erhaltenen Lignine zeichnen sich im Vergleich zum Stand der Technik gewonnenen Ligninen, beispielsweise durch das Kraft- oder das Sulfit-Verfahren letzteres mit etwa bis zu 9 Gew.-% Schwefel, durch einen niedrigen Schwefelgehalt von weniger als 0,05 Gew.% aus. Grundsätzlich unterscheiden sich verschiedene technische Lignine in mehreren Eigenschaften, die dabei ihre Nutzung beeinflussen können. Der wesentliche Unterschied liegt in der Molekülgröße: Kraft-Lignin hat eine molare Masse von 2000 bis 3000 g/mol, während Lignosulfonate molare Massen von 20.000 bis 50.000 g/mol erreichen. Organosolv-Lignin liegt bei 1000 bis 2000 g/mol. Lignosulfonate enthalten zudem einen Schwefelanteil von 4% bis 8% und wenige phenolische Hydroxygruppen (-OH) gegenüber 1 % bis 1,5% Schwefelanteil und vielen phenolischen Hydroxygruppen beim Kraft-Lignin und vielen phenolischen Hydroxidionen (OH⁻) ohne Schwefelanteil beim Organosolv-Lignin.

Gegenüber Lignin aus dem Organosolv-Verfahren weist das erfindungsgemäße gewonnene Lignin eine höhere Molmasse auf. Aufgrund seiner Eigenschaften, insbesondere des niedrigen Schwefelgehaltes, kann das erfindungsgemäß gewonnene Lignin für höherwertige Anwendungen, beispielweise zur Herstellung von Kunststoffen, genutzt werden. Gleichzeitig werden aber anders als bei dem Organosolv-Verfahren, bei dem wasserunlösliche polymere Saccharide erhalten werden, wasserlösliche Saccharide wie Glucose, Xylose etc. gewonnen,

Auch unter Berücksichtigung der Tatsache, dass die durch das mechanokatalytische Verfahren entstehenden Produkte vollständig wasserlöslich sind, erlaubt dieser Vorteil, dass die Verarbeitung der Produktmischung in einem kontinuierlichen Reaktor mittels eines Festkörperkatalysators durchgeführt werden kann, was prozeßtechnisch von großem Vorteil ist. Das erfindungsgemäße Verfahren lässt sich selbstverständlich ebenso batchweise durchführen.

Die vorliegende Erfindung wird in den nachfolgenden Beispielen näher erläutert, ohne die Erfindung auf diese Beispiele zu beschränken.

### BEISPIELE

### Beispiel 1

Buchenholzsägespäne wurden mit einem Küchenmixer zu einem Pulver verarbeitet. Das Pulver wurde gesiebt und die Partikel unter 250 µm weiterverwendet. Buchenholzsägespäne (10 g) wurden in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 2 Stunden vermahlen. Die Drehfrequenz der Hauptscheibe betrug 800 U/min. Eine Probe der erhaltenen Pulver wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (1,35 mL) gelöst. Die Lösung wurde für 1 Stunde auf 40 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffes wurde mittels Elementaranalyse und Infrarotspektroskopie untersucht. Das Filtrat der vereinigten Ansätze wurde mit HPLC analysiert.

Die Ausbeute des Festrückstandes betrug 0,041 g. Die ultimative Analyse der Festrückstände ergab 47,6 % Kohlenstoff, 6,2 % Wasserstoff, 0,3 % Stickstoff, 0,0 % Schwefel und 46,3 % Sauerstoff (Differenz). In der wässerige Lösung betrug die Ausbeute von Cellobiose 6,3 %, Glucose 3,9 %, und von Xylose 7,1 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 2

Buchenholzsägespäne wurden mit einem Küchenmixer zu einem Pulver verarbeitet. Das Pulver wurde gesiebt und die Partikel unter 250 µm weiterverwendet. Buchenholzsägespäne (10 g) wurden in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegten und getrockneten Pulver (1 g) in einem Stahlbecher mit Stahlkugeln (5 Stahlkugeln; Einzelgewicht 3,95 g) in einer Pulverisette P7 der Firma Fritsch für 2 Stunden vermahlen. Die Drehfrequenz der Hauptscheibe betrug 800 U/min. Eine Probe der erhaltenen Pulver wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 60 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffes wurde mittels Elementaranalyse und Infrarotspektroskopie untersucht. Das Filtrat der vereinigten Ansätze wurde mit HPLC analysiert.

Die Ausbeute des Festrückstandes betrug 0,035 g. Die ultimative Analyse der Festrückstände ergab 52,5 % Kohlenstoff, 5,7 % Wasserstoff, 0,5 % Stickstoff, 0,5 % Schwefel und 40,8 % Sauerstoff (Differenz). In der wässerige Lösung betrug die Ausbeute von Cellobiose 6,0 %, Glucose 3,8 %, und von Xylose 7,2 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 3

Buchenholzsägespäne wurden mit einem Küchenmixer zu einem Pulver verarbeitet. Das Pulver wurde gesiebt und die Partikel unter 250 µm weiterverwendet. Buchenholzsägespäne (10 g) wurden in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 2 Stunden vermahlen. Die Drehfrequenz der Hauptscheibe betrug 800 U/min. Eine Probe der erhaltenen Pulver wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 70 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffes wurde mittels Elementaranalyse und Infrarotspektroskopie untersucht. Das Filtrat der vereinigten Ansätze wurde mit HPLC analysiert.

Die Ausbeute des Festrückstandes betrug 0,093 g. Die ultimative Analyse der Festrückstände ergab 55,0 % Kohlenstoff, 5,4 % Wasserstoff, 0,5 % Stickstoff, 0,5 % Schwefel und 38,5 % Sauerstoff (Differenz). In der wässerige Lösung betrug die Ausbeute von Cellobiose 6,1 %, Glucose 4,3 %, und von Xylose 9,2 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 4

Buchenholzsägespäne wurden mit einem Küchenmixer zu einem Pulver verarbeitet. Das Pulver wurde gesiebt und die Partikel unter 250 µm weiterverwendet. Buchenholzsägespäne (10 g) wurden in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegten und getrockneten Pulver (1 g) in einem Stahlbecher mit Stahlkugeln (5 Stahlkugeln; Einzelgewicht 3,95 g) in einer Pulverisette P7 der Firma Fritsch für 2 Stunden vermahlen. Die Drehfrequenz der Hauptscheibe betrug 800 U/min. Eine Probe der erhaltenen Pulver wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 80 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffes wurde mittels Elementaranalyse und Infrarotspektroskopie untersucht. Das Filtrat der vereinigten Ansätze wurde mit HPLC analysiert.

Die Ausbeute des Festrückstandes betrug 0,163 g. Die ultimative Analyse der Festrückstände ergab 56,3 % Kohlenstoff, 5,8 % Wasserstoff, 0,4 % Stickstoff, 0,0 % Schwefel und 37,5 % Sauerstoff (Differenz). In der wässerige Lösung betrug die Ausbeute von Cellobiose 6,1 %, Glucose 4,8 %, und von Xylose 10,8 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 5

Buchenholzsägespäne wurden mit einem Küchenmixer zu einem Pulver verarbeitet. Das Pulver wurde gesiebt und die Partikel unter 250 µm weiterverwendet. Buchenholzsägespäne (10 g) wurden in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegten und getrockneten Pulver (1 g) in einem Stahlbecher mit Stahlkugeln (5 Stahlkugeln; Einzelgewicht 3,95 g) in einer Pulverisette P7 der Firma Fritsch für 2 Stunden vermahlen. Die Drehfrequenz der Hauptscheibe betrug 800 U/min. Eine Probe der erhaltenen Pulver wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 90 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffes wurde mittels Elementaranalyse und Infrarotspektroskopie untersucht. Das Filtrat der vereinigten Ansätze wurde mit HPLC analysiert.

Die Ausbeute des Festrückstandes betrug 0,220 g. Die ultimative Analyse der Festrückstände ergab 57,4 % Kohlenstoff, 5,8 % Wasserstoff, 0,5 % Stickstoff, 0,5 % Schwefel und 35,7 % Sauerstoff (Differenz). In der wässerige Lösung betrug die Ausbeute von Cellobiose 6,6 %, Glucose 5,9 %, und von Xylose 15,6 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 6

Buchenholzsägespäne wurden mit einem Küchenmixer zu einem Pulver verarbeitet. Das Pulver wurde gesiebt und die Partikel unter 250 µm weiterverwendet. Buchenholzsägespäne (10 g) wurden in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegten und getrockneten Pulver (1 g) in einem Stahlbecher mit Stahlkugeln (5 Stahlkugeln; Einzelgewicht 3,95 g) in einer Pulverisette P7 der Firma Fritsch für 2 Stunden vermahlen. Die Drehfrequenz der Hauptscheibe betrug 800 U/min. Eine Probe der erhaltenen Pulver wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 100 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffes wurde mittels Elementaranalyse und Infrarotspektroskopie untersucht. Das Filtrat der vereinigten Ansätze wurde mit HPLC analysiert.

Die Ausbeute des Festrückstandes betrug 0,221 g. Die ultimative Analyse der Festrückstände ergab 58,2 % Kohlenstoff, 5,9 % Wasserstoff, 0,4 % Stickstoff, 0,4 % Schwefel und 35,1 % Sauerstoff (Differenz). In der wässerige Lösung betrug die Ausbeute von Cellobiose 7,9 %, Glucose 8,7 %, und von Xylose 25,4 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 7

Buchenholzsägespäne wurden mit einem Küchenmixer zu einem Pulver verarbeitet. Das Pulver wurde gesiebt und die Partikel unter 250 µm weiterverwendet. Buchenholzsägespäne (10 g) wurden in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegten und getrockneten Pulver (1 g) in einem Stahlbecher mit Stahlkugeln (5 Stahlkugeln; Einzelgewicht 3,95 g) in einer Pulverisette P7 der Firma Fritsch für 2 Stunden vermahlen. Die Drehfrequenz der Hauptscheibe betrug 800 U/min. Eine Probe der erhaltenen Pulver wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 110 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffes wurde mittels Elementaranalyse und Infrarotspektroskopie untersucht. Das Filtrat der vereinigten Ansätze wurde mit HPLC analysiert.

Die Ausbeute des Festrückstandes betrug 0.217 g. Die ultimative Analyse der Festrückstände ergab 58,7 % Kohlenstoff, 6,0 % Wasserstoff, 0,5 % Stickstoff, 0,4 % Schwefel und 34,4 % Sauerstoff (Differenz). In der wässerige Lösung betrug die Ausbeute von Cellobiose 10,7 %, Glucose 15,4 %, und von Xylose 51,4 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 8

Buchenholzsägespäne wurden mit einem Küchenmixer zu einem Pulver verarbeitet. Das Pulver wurde gesiebt und die Partikel unter 250 µm weiterverwendet. Buchenholzsägespäne (10 g) wurden in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegten und getrockneten Pulver (1 g) in einem Stahlbecher mit Stahlkugeln (5 Stahlkugeln; Einzelgewicht 3,95 g) in einer Pulverisette P7 der Firma Fritsch für 2 Stunden vermahlen. Die Drehfrequenz der Hauptscheibe betrug 800 U/min. Eine Probe der erhaltenen Pulver wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 120 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffes wurde mittels Elementaranalyse und Infrarotspektroskopie untersucht. Das Filtrat der vereinigten Ansätze wurde mit HPLC analysiert.

Die Ausbeute des Festrückstandes betrug 0,203 g. Die ultimative Analyse der Festrückstände ergab 59,2 % Kohlenstoff, 5,8 % Wasserstoff, 0,5 % Stickstoff, 0,4 % Schwefel und 33,9 % Sauerstoff (Differenz). In der wässerige Lösung betrug die Ausbeute von Cellobiose 17,4 %, Glucose 34,4 %, und von Xylose 87,6 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 9

Buchenholzsägespäne wurden mit einem Küchenmixer zu einem Pulver verarbeitet. Das Pulver wurde gesiebt und die Partikel unter 250 µm weiterverwendet. Buchenholzsägespäne (10 g) wurden in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegten und getrockneten Pulver (1 g) in einem Stahlbecher mit Stahlkugeln (5 Stahlkugeln; Einzelgewicht 3,95 g) in einer Pulverisette P7 der Firma Fritsch für 2 Stunden vermahlen. Die Drehfrequenz der Hauptscheibe betrug 800 U/min. Eine Probe der erhaltenen Pulver wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 130 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffes wurde mittels Elementaranalyse und Infrarotspektroskopie untersucht. Das Filtrat der vereinigten Ansätze wurde mit HPLC analysiert.

Die Ausbeute des Festrückstandes betrug 0.197 g. Die ultimative Analyse der Festrückstände ergab 60,6 % Kohlenstoff, 5,8 % Wasserstoff, 0,2 % Stickstoff, 0,0 % Schwefel und 33,4 % Sauerstoff (Differenz). In der wässerige Lösung betrug die Ausbeute von Cellobiose 12.8 %, Glucose 69.2 %, und von Xylose 91,8 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 10

Buchenholzsägespäne wurden mit einem Küchenmixer zu einem Pulver verarbeitet. Das Pulver wurde gesiebt und die Partikel unter 250 µm weiterverwendet.

Diese Buchenholzsägespäne (10 g) wurden in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 2 Stunden vermahlen. Die Drehfrequenz der Hauptscheibe betrug 800 U/min. Eine Probe des erhaltenen Pulvers wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g, mit Säure) wurde in Wasser (9 mL) gelöst. Die Lösung wurde für 1 Stunde auf 135 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Das Filtrat der vereinigten Ansätze wurde mittels HPLC analysiert.

Die Ausbeute des Festrückstandes betrug 0,183 g. Die ultimative Analyse der Festrückstände ergab 61,4 % Kohlenstoff, 5,6 % Wasserstoff, 0,3 % Stickstoff, 0,1 % Schwefel und 32,7 % Sauerstoff (Differenz). In der wässerige Lösung betrug die Ausbeute von Cellobiose 8,6 %, Glucose 83,2 %, und von Xylose 93,7 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 11

Buchenholzsägespäne wurden mit einem Küchenmixer zu einem Pulver verarbeitet. Das Pulver wurde gesiebt und die Partikel unter 250 µm weiterverwendet.

Diese Buchenholzsägespäne (10 g) wurden in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 2 Stunden vermahlen. Die Drehfrequenz der Hauptscheibe betrug 800 U/min. Eine Probe des erhaltenen Pulvers wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 140 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Das Filtrat der vereinigten Ansätze wurde mittels HPLC analysiert.

Die Ausbeute des Festrückstandes betrug 0,190 g. Die ultimative Analyse der Festrückstände ergab 60,6 % Kohlenstoff, 5,5 % Wasserstoff, 0,2 % Stickstoff, 0,0 % Schwefel und 33,7 % Sauerstoff (Differenz). In der wässerige Lösung betrug die Ausbeute von Cellobiose 3,5 %, Glucose 88,3 %, und von Xylose 92,5 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 12

Buchenholzsägespäne wurden mit einem Küchenmixer zu einem Pulver verarbeitet. Das Pulver wurde gesiebt und die Partikel unter 250 µm weiterverwendet.

Diese Buchenholzsägespäne (10 g) wurden in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 2 Stunden vermahlen. Die Drehfrequenz der Hauptscheibe betrug 800 U/min. Eine Probe des erhaltenen Pulvers wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 145 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Das Filtrat der vereinigten Ansätze wurde mittels HPLC analysiert.

Die Ausbeute des Festrückstandes betrug 0,187 g. Die ultimative Analyse der Festrückstände ergab 61,3 % Kohlenstoff, 5,7 % Wasserstoff, 0,1 % Stickstoff, 0,0 % Schwefel und 32,9 % Sauerstoff (Differenz). In der wässerige Lösung betrug die Ausbeute von Cellobiose 3,2 %, Glucose 91,2 %, und von Xylose 92,2 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 13

Zuckerrohr-Bagasse wurde mit einem Küchenmixer zu einem Pulver verarbeitet. Das Pulver wurde gesiebt und die Partikel unter 250 µm weiterverwendet.

Die klassierte Zuckerrohr-Bagasse (10 g) wurde in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegten und getrockneten Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe der erhaltenen Pulver wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g, mit Säure) wurde in Wasser (4,5 mL) gelöst. Die Lösung wurde für 1 Stunde auf 60 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffes wurde mittels Elementaranalyse und Infrarotspektroskopie untersucht. Das Filtrat der vereinigten Ansätze wurde mit HPLC analysiert.

Die Ausbeute des Festrückstandes betrug 0,190 g. Die ultimative Analyse der Festrückstände ergab 46,0 % Kohlenstoff, 6,2 % Wasserstoff, 0,3 % Stickstoff, 0,2 % Schwefel und 47,4 % Sauerstoff (Differenz). In der wässerige Lösung betrug die Ausbeute von Cellobiose 5,1 %, Glucose 4,0 %, und von Xylose 13,3 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 14

Zuckerrohr-Bagasse wurde mit einem Küchenmixer zu einem Pulver verarbeitet. Das Pulver wurde gesiebt und die Partikel unter 250 µm weiterverwendet.

Die klassierte Zuckerrohr-Bagasse (10 g) wurde in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegten und getrockneten Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe der erhaltenen Pulver wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (6,75 mL) gelöst. Die Lösung wurde für 1 Stunde auf 60 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffes wurde mittels Elementaranalyse und Infrarotspektroskopie untersucht. Das Filtrat der vereinigten Ansätze wurde mit HPLC analysiert.

Die Ausbeute des Festrückstandes betrug 0,153 g. Die ultimative Analyse der Festrückstände ergab 46,6 % Kohlenstoff, 6,2 % Wasserstoff, 0,3 % Stickstoff, 0,2 % Schwefel und 46,7 % Sauerstoff (Differenz). In der wässerige Lösung betrug die Ausbeute von Cellobiose 4,5 %, Glucose 3,7 %, und von Xylose 12,7 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 15

Zuckerrohr-Bagasse wurde mit einem Küchenmixer zu einem Pulver verarbeitet. Das Pulver wurde gesiebt und die Partikel unter 250 µm weiterverwendet.

Die klassierte Zuckerrohr-Bagasse (10 g) wurde in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegten und getrockneten Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe der erhaltenen Pulver wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 60 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffes wurde mittels Elementaranalyse und Infrarotspektroskopie untersucht. Das Filtrat der vereinigten Ansätze wurde mit HPLC analysiert.

Die Ausbeute des Festrückstandes betrug 0,173 g. Die ultimative Analyse der Festrückstände ergab 48,0 % Kohlenstoff, 6,3 % Wasserstoff, 0,4 % Stickstoff, 0,3 % Schwefel und 44,9 % Sauerstoff (Differenz). In der wässerige Lösung betrug die Ausbeute von Cellobiose 5,3 %, Glucose 3,7 %, und von Xylose 12,9 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 16

Zuckerrohr-Bagasse wurde mit einem Küchenmixer zu einem Pulver verarbeitet. Das Pulver wurde gesiebt und die Partikel unter 250 µm weiterverwendet.

Die klassierte Zuckerrohr-Bagasse (10 g) wurde in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegten und getrockneten Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe der erhaltenen Pulver wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 70 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffes wurde mittels Elementaranalyse und Infrarotspektroskopie untersucht. Das Filtrat der vereinigten Ansätze wurde mit HPLC analysiert.

Die Ausbeute des Festrückstandes betrug 0,198 g. Die ultimative Analyse der Festrückstände ergab 50,9 % Kohlenstoff, 5,8 % Wasserstoff, 0,5 % Stickstoff, 0,4 % Schwefel und 42,4 % Sauerstoff (Differenz). In der wässerige Lösung betrug die Ausbeute von Cellobiose 5,3 %, Glucose 4,1 %, und von Xylose 12,7 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 17

Zuckerrohr-Bagasse wurde mit einem Küchenmixer zu einem Pulver verarbeitet. Das Pulver wurde gesiebt und die Partikel unter 250 µm weiterverwendet.

Die klassierte Zuckerrohr-Bagasse (10 g) wurde in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegten und getrockneten Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe der erhaltenen Pulver wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 80 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffes wurde mittels Elementaranalyse und Infrarotspektroskopie untersucht. Das Filtrat der vereinigten Ansätze wurde mit HPLC analysiert.

Die Ausbeute des Festrückstandes betrug 0,216 g. Die ultimative Analyse der Festrückstände ergab 51,3 % Kohlenstoff, 5,6 % Wasserstoff, 0,3 % Stickstoff, 0,4 % Schwefel und 42,4 % Sauerstoff (Differenz). In der wässerige Lösung betrug die Ausbeute von Cellobiose 6,4 %, Glucose 5,1 %, und von Xylose 15,6 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 18

Zuckerrohr-Bagasse wurde mit einem Küchenmixer zu einem Pulver verarbeitet. Das Pulver wurde gesiebt und die Partikel unter 250 µm weiterverwendet.

Die klassierte Zuckerrohr-Bagasse (10 g) wurde in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegten und getrockneten Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe der erhaltenen Pulver wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 90 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffes wurde mittels Elementaranalyse und Infrarotspektroskopie untersucht. Das Filtrat der vereinigten Ansätze wurde mit HPLC analysiert.

Die Ausbeute des Festrückstandes betrug 0,250 g. Die ultimative Analyse der Festrückstände ergab 52,0 % Kohlenstoff, 5,9 % Wasserstoff, 0,4 % Stickstoff, 0,4 % Schwefel und 41,3 % Sauerstoff (Differenz). In der wässerige Lösung betrug die Ausbeute von Cellobiose 5,5 %, Glucose 5,0 %, und von Xylose 20,4 %.

### Beispiel 19

Zuckerrohr-Bagasse wurde mit einem Küchenmixer zu einem Pulver verarbeitet. Das Pulver wurde gesiebt und die Partikel unter 250 µm weiterverwendet.

Die klassierte Zuckerrohr-Bagasse (10 g) wurde in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegten und getrockneten Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe der erhaltenen Pulver wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 100 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffes wurde mittels Elementaranalyse und Infrarotspektroskopie untersucht. Das Filtrat der vereinigten Ansätze wurde mit HPLC analysiert.

Die Ausbeute des Festrückstandes betrug 0.242 g. Die ultimative Analyse der Festrückstände ergab 52,4 % Kohlenstoff, 5,9 % Wasserstoff, 0,5 % Stickstoff, 0,1 % Schwefel und 41,1 % Sauerstoff (Differenz). In der wässerige Lösung betrug die Ausbeute von Cellobiose 7,4 %, Glucose 7,7 %, und von Xylose 32,6 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 20

Zuckerrohr-Bagasse wurde mit einem Küchenmixer zu einem Pulver verarbeitet. Das Pulver wurde gesiebt und die Partikel unter 250 µm weiterverwendet.

Die klassierte Zuckerrohr-Bagasse (10 g) wurde in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegten und getrockneten Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe der erhaltenen Pulver wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 110 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffes wurde mittels Elementaranalyse und Infrarotspektroskopie untersucht. Das Filtrat der vereinigten Ansätze wurde mit HPLC analysiert.

Die Ausbeute des Festrückstandes betrug 0,229 g. Die ultimative Analyse der Festrückstände ergab 52,9 % Kohlenstoff, 6,0 % Wasserstoff, 0,3 % Stickstoff, 0,3 % Schwefel und 40,7 % Sauerstoff (Differenz). In der wässerige Lösung betrug die Ausbeute von Cellobiose 10,1 %, Glucose 15,3 %, und von Xylose 75,4 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 21

Zuckerrohr-Bagasse wurde mit einem Küchenmixer zu einem Pulver verarbeitet. Das Pulver wurde gesiebt und die Partikel unter 250 µm weiterverwendet.

Die klassierte Zuckerrohr-Bagasse (10 g) wurde in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegten und getrockneten Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe der erhaltenen Pulver wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 120 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffes wurde mittels Elementaranalyse und Infrarotspektroskopie untersucht. Das Filtrat der vereinigten Ansätze wurde mit HPLC analysiert.

Die Ausbeute des Festrückstandes betrug 0,188 g. Die ultimative Analyse der Festrückstände ergab 53,3 % Kohlenstoff, 6,3 % Wasserstoff, 0,4 % Stickstoff, 0,2 % Schwefel und 39,9 % Sauerstoff (Differenz). In der wässerige Lösung betrug die Ausbeute von Cellobiose 18,6 %, Glucose 35,4 %, und von Xylose 100 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 22

Zuckerrohr-Bagasse wurde mit einem Küchenmixer zu einem Pulver verarbeitet. Das Pulver wurde gesiebt und die Partikel unter 250 µm weiterverwendet.

Die klassierte Zuckerrohr-Bagasse (10 g) wurde in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe des erhaltenen Pulvers wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g, mit Säure) wurde in Wasser (9 mL) gelöst. Die Lösung wurde für 1 Stunde auf 130 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Das Filtrat der vereinigten Ansätze wurde mittels HPLC analysiert.

Die Ausbeute des Festrückstandes betrug 0,149 g. Die ultimative Analyse der Festrückstände ergab 56,3 % Kohlenstoff, 6,0 % Wasserstoff, 0,3 % Stickstoff, 0,1 % Schwefel und 37,4 % Sauerstoff (Differenz). In der wässerige Lösung betrug die Ausbeute von Cellobiose 15,8 %, Glucose 65,6 %, und von Xylose 95,4 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 23

Zuckerrohr-Bagasse wurde mit einem Küchenmixer zu einem Pulver verarbeitet. Das Pulver wurde gesiebt und die Partikel unter 250 µm weiterverwendet.

Die klassierte Zuckerrohr-Bagasse (10 g) wurde in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe des erhaltenen Pulvers wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 140 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Das Filtrat der vereinigten Ansätze wurde mittels HPLC analysiert.

Die Ausbeute des Festrückstandes betrug 0.142 g. Die ultimative Analyse der Festrückstände ergab 59,4 % Kohlenstoff, 6,0 % Wasserstoff, 0,4 % Stickstoff, 0,2 % Schwefel und 33,9 % Sauerstoff (Differenz). In der wässerige Lösung betrug die Ausbeute von Cellobiose 8,8 %, Glucose 92,0 %, und von Xylose 94,8 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 24

Zuckerrohr-Bagasse wurde mit einem Küchenmixer zu einem Pulver verarbeitet. Das Pulver wurde gesiebt und die Partikel unter 250 µm weiterverwendet.

Die klassierte Zuckerrohr-Bagasse (10 g) wurde in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe des erhaltenen Pulvers wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 145 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Das Filtrat der vereinigten Ansätze wurde mittels HPLC analysiert.

Die Ausbeute des Festrückstandes betrug 0,163 g. Die ultimative Analyse der Festrückstände ergab 56,6 % Kohlenstoff, 5,6 % Wasserstoff, 0,3 % Stickstoff, 0,0 % Schwefel und 37,5 % Sauerstoff (Differenz). In der wässerige Lösung betrug die Ausbeute von Cellobiose 1,7 %, Glucose 87,4 %, und von Xylose 89,6 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 25

Kiefernholzsägespäne wurden mit einem Küchenmixer zu einem Pulver verarbeitet. Das Pulver wurde gesiebt und die Partikel unter 250 µm weiterverwendet. Kiefernholzsägespäne (10 g) wurden in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe des erhaltenen Pulvers wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (4,5 mL) gelöst. Die Lösung wurde für 1 Stunde auf 60 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Das Filtrat der vereinigten Ansätze wurde mittels HPLC analysiert.

Die Ausbeute des Festrückstandes betrug 0,031 g. Die ultimative Analyse der Festrückstände ergab 46,8 % Kohlenstoff, 6,3 % Wasserstoff, 0,1 % Stickstoff, 0,5 % Schwefel und 46,3 % Sauerstoff (Differenz). In der wässerige Lösung betrug die Ausbeute von Cellobiose 5,0 %, Glucose 4,3 %, und von Xylose 9,7 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 26

Kiefernholzsägespäne wurden mit einem Küchenmixer zu einem Pulver verarbeitet. Das Pulver wurde gesiebt und die Partikel unter 250 µm weiterverwendet. Kiefernholzsägespäne (10 g) wurden in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe des erhaltenen Pulvers wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 80 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Das Filtrat der vereinigten Ansätze wurde mittels HPLC analysiert.

Die Ausbeute des Festrückstandes betrug 0,005 g. In der wässerige Lösung betrug die Ausbeute von Cellobiose 3,1 %, Glucose 2,9 %, und von Xylose 8,4 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 27

Kiefernholzsägespäne wurden mit einem Küchenmixer zu einem Pulver verarbeitet. Das Pulver wurde gesiebt und die Partikel unter 250 µm weiterverwendet. Kiefernholzsägespäne (10 g) wurden in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe des erhaltenen Pulvers wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 90 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Das Filtrat der vereinigten Ansätze wurde mittels HPLC analysiert.

Die Ausbeute des Festrückstandes betrug 0,279 g. Die ultimative Analyse der Festrückstände ergab 59,1 % Kohlenstoff, 6,1 % Wasserstoff, 0,1 % Stickstoff, 0,8 % Schwefel und 33,9 % Sauerstoff (Differenz). In der wässerige Lösung betrug die Ausbeute von Cellobiose 5,3 %, Glucose 4,6 %, und von Xylose 10,7 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 28

Kiefernholzsägespäne wurden mit einem Küchenmixer zu einem Pulver verarbeitet. Das Pulver wurde gesiebt und die Partikel unter 250 µm weiterverwendet. Kiefernholzsägespäne (10 g) wurden in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe des erhaltenen Pulvers wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 100 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Das Filtrat der vereinigten Ansätze wurde mittels HPLC analysiert.

Die Ausbeute des Festrückstandes betrug 0,276 g. Die ultimative Analyse der Festrückstände ergab 60,0 % Kohlenstoff, 6,2 % Wasserstoff, 0,1 % Stickstoff, 0,6 % Schwefel und 33,2 % Sauerstoff (Differenz). In der wässerige Lösung betrug die Ausbeute von Cellobiose 4,9 %, Glucose 4,7 %, und von Xylose 15,5 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 29

Kiefernholzsägespäne wurden mit einem Küchenmixer zu einem Pulver verarbeitet. Das Pulver wurde gesiebt und die Partikel unter 250 µm weiterverwendet. Kiefernholzsägespäne (10 g) wurden in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe des erhaltenen Pulvers wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 110 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Das Filtrat der vereinigten Ansätze wurde mittels HPLC analysiert.

Die Ausbeute des Festrückstandes betrug 0,262 g. Die ultimative Analyse der Festrückstände ergab 60,6 % Kohlenstoff, 6,0 % Wasserstoff, 0,1 % Stickstoff, 0,3 % Schwefel und 33,0 % Sauerstoff (Differenz). In der wässerige Lösung betrug die Ausbeute von Cellobiose 11,7 %, Glucose 14,7 %, und von Xylose 45,9 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 30

Kiefernholzsägespäne wurden mit einem Küchenmixer zu einem Pulver verarbeitet. Das Pulver wurde gesiebt und die Partikel unter 250 µm weiterverwendet. Kiefernholzsägespäne (10 g) wurden in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe des erhaltenen Pulvers wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 120 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Das Filtrat der vereinigten Ansätze wurde mittels HPLC analysiert.

Die Ausbeute des Festrückstandes betrug 0,262 g. Die ultimative Analyse der Festrückstände ergab 60,9 % Kohlenstoff, 6,0 % Wasserstoff, 0,1 % Stickstoff, 0,2 % Schwefel und 32,7 % Sauerstoff (Differenz). In der wässerige Lösung betrug die Ausbeute von Cellobiose 18,5 %, Glucose 32,7 %, und von Xylose 79,1 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 31

Kiefernholzsägespäne wurden mit einem Küchenmixer zu einem Pulver verarbeitet. Das Pulver wurde gesiebt und die Partikel unter 250 µm weiterverwendet. Kiefernholzsägespäne (10 g) wurden in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe des erhaltenen Pulvers wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 130 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Das Filtrat der vereinigten Ansätze wurde mittels HPLC analysiert.

Die Ausbeute des Festrückstandes betrug 0,238 g. Die ultimative Analyse der Festrückstände ergab 61,7 % Kohlenstoff, 6,3 % Wasserstoff, 0,0 % Stickstoff, 0,2 % Schwefel und 31,7 % Sauerstoff (Differenz). In der wässerige Lösung betrug die Ausbeute von Cellobiose 14,2 %, Glucose 67,8 %, und von Xylose 88,4 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 32

Kiefernholzsägespäne wurden mit einem Küchenmixer zu einem Pulver verarbeitet. Das Pulver wurde gesiebt und die Partikel unter 250 µm weiterverwendet. Kiefernholzsägespäne (10 g) wurden in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe des erhaltenen Pulvers wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 140 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Das Filtrat der vereinigten Ansätze wurde mittels HPLC analysiert.

Die Ausbeute des Festrückstandes betrug 0,241 g. Die ultimative Analyse der Festrückstände ergab 61,9 % Kohlenstoff, 6,3 % Wasserstoff, 0,1 % Stickstoff, 0,2 % Schwefel und 31,5 % Sauerstoff (Differenz). In der wässerige Lösung betrug die Ausbeute von Cellobiose 6,6 %, Glucose 87,5 %, und von Xylose 98,8 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 33

Kiefernholzsägespäne wurden mit einem Küchenmixer zu einem Pulver verarbeitet. Das Pulver wurde gesiebt und die Partikel unter 250 µm weiterverwendet. Kiefernholzsägespäne (10 g) wurden in Diethylether (150 mL) dispergiert und Schwefelsäure (0,52 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe des erhaltenen Pulvers wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 145 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Das Filtrat der vereinigten Ansätze wurde mittels HPLC analysiert.

Die Ausbeute des Festrückstandes betrug 0,235 g. Die ultimative Analyse der Festrückstände ergab 62,1 % Kohlenstoff, 6,2 % Wasserstoff, 0,0 % Stickstoff, 0,3 % Schwefel und 31,4 % Sauerstoff (Differenz). In der wässerige Lösung betrug die Ausbeute von Cellobiose 4,2 %, Glucose 88,4 %, und von Xylose 97,2 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 34

Kiefernholzsägespäne wurden mit einem Küchenmixer zu einem Pulver verarbeitet. Das Pulver wurde gesiebt und die Partikel unter 250 µm weiterverwendet. Kiefernholzsägespäne (10 g) wurden in Diethylether (150 mL) dispergiert und Schwefelsäure (0,78 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe des erhaltenen Pulvers wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 70 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Das Filtrat der vereinigten Ansätze wurde mittels HPLC analysiert.

Die Ausbeute des Festrückstandes betrug 0,006 g. In der wässerige Lösung betrug die Ausbeute von Cellobiose 5,3 %, Glucose 4,3 %, und von Xylose 9,6 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 35

Kiefernholzsägespäne wurden mit einem Küchenmixer zu einem Pulver verarbeitet. Das Pulver wurde gesiebt und die Partikel unter 250 µm weiterverwendet. Kiefernholzsägespäne (10 g) wurden in Diethylether (150 mL) dispergiert und Schwefelsäure (0,78 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe des erhaltenen Pulvers wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösungen wurden für 1 Stunde auf 80 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Das Filtrat der vereinigten Ansätze wurde mittels HPLC analysiert.

Die Ausbeute des Festrückstandes betrug 0,003 g. In der wässerige Lösung betrug die Ausbeute von Cellobiose 6,1 %, Glucose 5,1 %, und von Xylose 10,9 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 36

Kiefernholzsägespäne wurden mit einem Küchenmixer zu einem Pulver verarbeitet. Das Pulver wurde gesiebt und die Partikel unter 250 µm weiterverwendet. Kiefernholzsägespäne (10 g) wurden in Diethylether (150 mL) dispergiert und Schwefelsäure (0,78 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe des erhaltenen Pulvers wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 90 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Das Filtrat der vereinigten Ansätze wurde mittels HPLC analysiert.

Die Ausbeute des Festrückstandes betrug 0,311 g. Die ultimative Analyse der Festrückstände ergab 59,7 % Kohlenstoff, 6,0 % Wasserstoff, 0,1 % Stickstoff, 0,2 % Schwefel und 34,0 % Sauerstoff (Differenz). In der wässerige Lösung betrug die Ausbeute von Cellobiose 4,2 %, Glucose 4,5 %, und von Xylose 14,2 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 37

Kiefernholzsägespäne wurden mit einem Küchenmixer zu einem Pulver verarbeitet. Das Pulver wurde gesiebt und die Partikel unter 250 µm weiterverwendet. Kiefernholzsägespäne (10 g) wurden in Diethylether (150 mL) dispergiert und Schwefelsäure (0,78 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe des erhaltenen Pulvers wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 100 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Das Filtrat der vereinigten Ansätze wurde mittels HPLC analysiert.

Die Ausbeute des Festrückstandes betrug 0,274 g. Die ultimative Analyse der Festrückstände ergab 60,9 % Kohlenstoff, 6,0 % Wasserstoff, 0,1 % Stickstoff, 0,4 % Schwefel und 32,5 % Sauerstoff (Differenz). In der wässerige Lösung betrug die Ausbeute von Cellobiose 6,8 %, Glucose 8,3 %, und von Xylose 28,1 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 38

Kiefernholzsägespäne wurden mit einem Küchenmixer zu einem Pulver verarbeitet. Das Pulver wurde gesiebt und die Partikel unter 250 µm weiterverwendet. Kiefernholzsägespäne (10 g) wurden in Diethylether (150 mL) dispergiert und Schwefelsäure (0,78 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe des erhaltenen Pulvers wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 110 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Das Filtrat der vereinigten Ansätze wurde mittels HPLC analysiert.

Die Ausbeute des Festrückstandes betrug 0,246 g. Die ultimative Analyse der Festrückstände ergab 61,3 % Kohlenstoff, 6,3 % Wasserstoff, 0,1 % Stickstoff, 0,1 % Schwefel und 32,1 % Sauerstoff (Differenz). In der wässerige Lösung betrug die Ausbeute von Cellobiose 14,9 %, Glucose 20,1 %, und von Xylose 52,9 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 39

Kiefernholzsägespäne wurden mit einem Küchenmixer zu einem Pulver verarbeitet. Das Pulver wurde gesiebt und die Partikel unter 250 µm weiterverwendet. Kiefernholzsägespäne (10 g) wurden in Diethylether (150 mL) dispergiert und Schwefelsäure (0,78 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe des erhaltenen Pulvers wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 120 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Das Filtrat der vereinigten Ansätze wurde mittels HPLC analysiert.

Die Ausbeute des Festrückstandes betrug 0,219 g. Die ultimative Analyse der Festrückstände ergab 61,4 % Kohlenstoff, 6,3 % Wasserstoff, 0,1 % Stickstoff, 0,0 % Schwefel und 32,2 % Sauerstoff (Differenz). In der wässerige Lösung betrug die Ausbeute von Cellobiose 21,1 %, Glucose 51,6 %, und von Xylose 88,9 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 40

Kiefernholzsägespäne wurden mit einem Küchenmixer zu einem Pulver verarbeitet. Das Pulver wurde gesiebt und die Partikel unter 250 µm weiterverwendet. Kiefernholzsägespäne (10 g) wurden in Diethylether (150 mL) dispergiert und Schwefelsäure (0,78 mL, 95 - 97 %, Handelsprodukt der Firma J. T. Baker, USA) wurde tropfenweise zugegeben. Die Suspension wurde 1 Stunde gerührt, bevor das Lösungsmittel unter vermindertem Druck entfernt wurde. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe des erhaltenen Pulvers wurde in Wasser gelöst und mittels HPLC-Analyse untersucht. Das so erhaltene Pulver war vollständig wasserlöslich und ergab eine rotbräunliche und klare Lösung.

Das erhaltene Pulver (0,9 g mit Säure) wurde in Wasser (9 mL) gelöst. Die Lösung wurde für 1 Stunde auf 130 °C erhitzt. Der dabei entstehende Feststoff (Lignin) wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Das Filtrat der vereinigten Ansätze wurde mittels HPLC analysiert.

Die Ausbeute des Festrückstandes betrug 0,230 g. Die ultimative Analyse der Festrückstände ergab 62,4 % Kohlenstoff, 6,3 % Wasserstoff, 0,0 % Stickstoff, 0,0 % Schwefel und 31,3 % Sauerstoff (Differenz). In der wässerige Lösung betrug die Ausbeute von Cellobiose 7,8 %, Glucose 86,3 %, und von Xylose 99,9 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

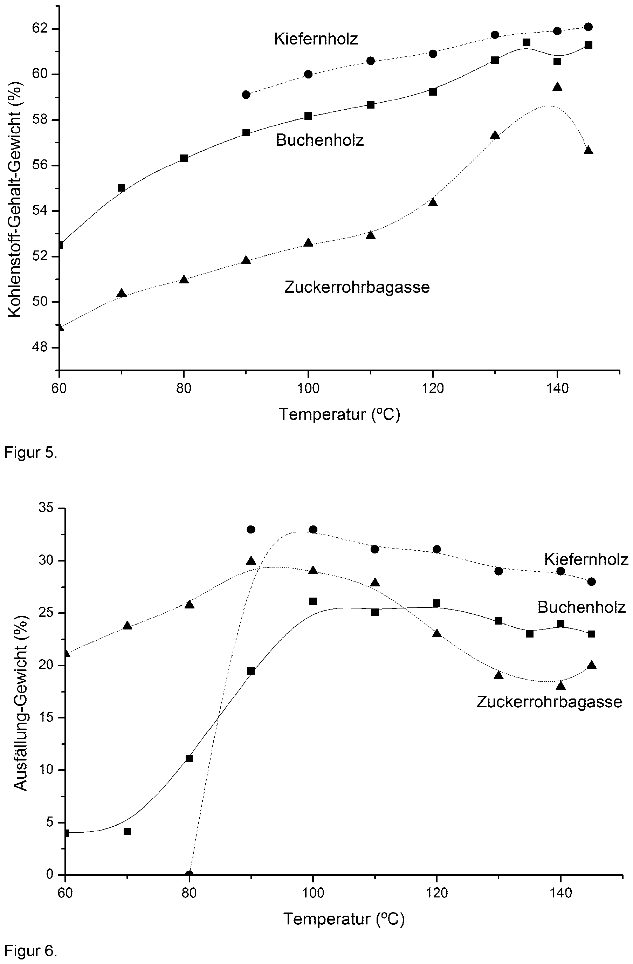

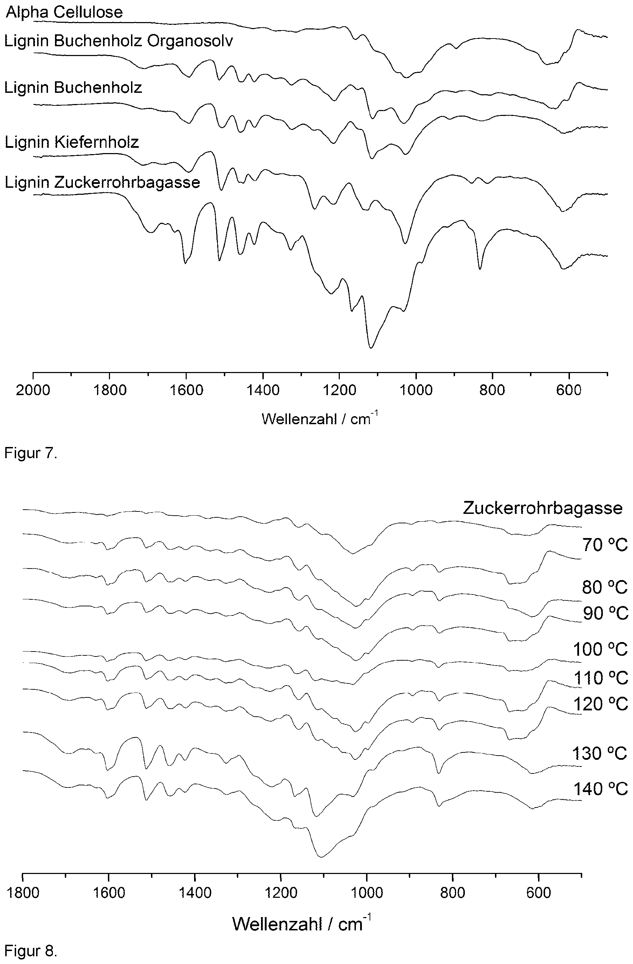

Die fraktionierten Lignine wurden mittels IR und Elementaranalyse analysiert (Figur 5 und 8). Die Ergebnisse zeigen, dass mit steigender Hydrolysetemperatur der Kohlenstoffanteil des Niederschlages ansteigt.

### Beispiel 41

Buchenholzsägespäne wurden mit einem Küchenmixer zu einem Pulver verarbeitet. Das Pulver wurde gesiebt und die Partikel unter 250 µm weiterverwendet. Chlorwasserstoffgas (99,8 %, Air Liquide) wurde 15 min. bei Normaldruck über Buchenholzsägespäne (5 g) geleitet. Anschließend wurde das Produkt im Vakuum (0,001 Torr) entgast. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 2 Stunden vermahlen. Die Drehfrequenz der Hauptscheibe betrug 800 U/min. Eine Probe der erhaltenen Pulver wurde in Wasser gelöst und mittels HPLC-Analyse untersucht. Das so erhaltene Pulver war zum Teil wasserlöslich (73 %) und ergab eine rotbräunliche klare Lösung.

Das erhaltene Pulver (0,9 g mit Säure) wurde in Wasser (9 mL) dispergiert. Die Dispersion wurde für 1 Stunde auf 140 °C erhitzt. Der Feststoff wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Diese Analysen ergaben, dass der Feststoff aus Lignin besteht. Das Filtrat der vereinigten Ansätze wurde mit HPLC analysiert.

Die Ausbeute des Festrückstandes betrug 0,207 g. Die ultimative Analyse der Festrückstände ergab 62,7 % Kohlenstoff, 6,0 % Wasserstoff, 0,4 % Stickstoff, 0,0 % Schwefel und 30,8 % Sauerstoff (Differenz). In der wässerige Lösung betrug die Ausbeute von Cellobiose 7,2 %, Glucose 75,6 %, und von Xylose 87,9 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

### Beispiel 42

Zuckerrohr-Bagasse wurde mit einem Küchenmixer zu einem Pulver verarbeitet. Das Pulver wurde gesiebt und die Partikel unter 250 µm weiterverwendet.

Chlorwasserstoffgas (99,8 %, Air Liquide) wurde 15 min. bei Normaldruck über der klassierten Zuckerrohr-Bagasse (5 g) geleitet. Anschließend wurde das Produkt im Vakuum (0,001 Torr) entgast. Weiterhin wurde das mit Säure belegte und getrocknete Pulver (1 g) in einem Stahlbecher mit Stahlkugeln (5 Stahlkugeln; Einzelgewicht 3,95 g) in einer Pulverisette P7 der Firma Fritsch für 3 Stunden vermahlen. Die Drehfrequenz der Hauptscheibe betrug 800 U/min. Eine Probe der erhaltenen Pulver wurde in Wasser gelöst und mittels HPLC-Analyse untersucht. Das so erhaltene Pulver war zum Teil (80 %) wasserlöslich und ergab eine rotbräunliche klare Lösung.

Das erhaltene Pulver (0,9 g, mit Säure) wurde in Wasser (9 mL) dispergiert. Die Dispersion wurde für 1 Stunde auf 140 °C erhitzt. Der Feststoff wurde durch Filtration oder Zentrifugation abgetrennt.

Der Feststoff wurde 6 Mal mit je 25 mL Wasser gewaschen. Danach wurde der Feststoff für 24 Stunden unter Vakuum bei 60 °C getrocknet. Der trockene Feststoff wurde gewogen. Die chemische Zusammensetzung des Feststoffs wurde mittels Elementaranalyse und Infrarotspektroskopie untersucht. Diese Analysen ergaben, dass der Feststoff aus Lignin besteht. Das Filtrat der vereinigten Ansätze wurde mit HPLC analysiert.

Die Ausbeute des Festrückstandes betrug 0,150 g. Die ultimative Analyse der Festrückstände ergab 61,6 % Kohlenstoff, 5,6 % Wasserstoff, 0,4 % Stickstoff, 0,0 % Schwefel und 32,4 % Sauerstoff (Differenz). In der wässerige Lösung betrug die Ausbeute von Cellobiose 5,0 %, Glucose 86,6 %, und von Xylose 97,6 %. Die Ausbeute von Glucose und Cellobiose sind auf den Hexose-Anteil in der ursprünglichen Biomasse bezogen. Wiederum ist die Ausbeute von Xylose auf den Pentose-Anteil in der ursprünglichen Biomasse bezogen.

Die vorliegende Erfindung wird durch die beigefügten Abbildungen weiter erläutert. Dabei zeigen:

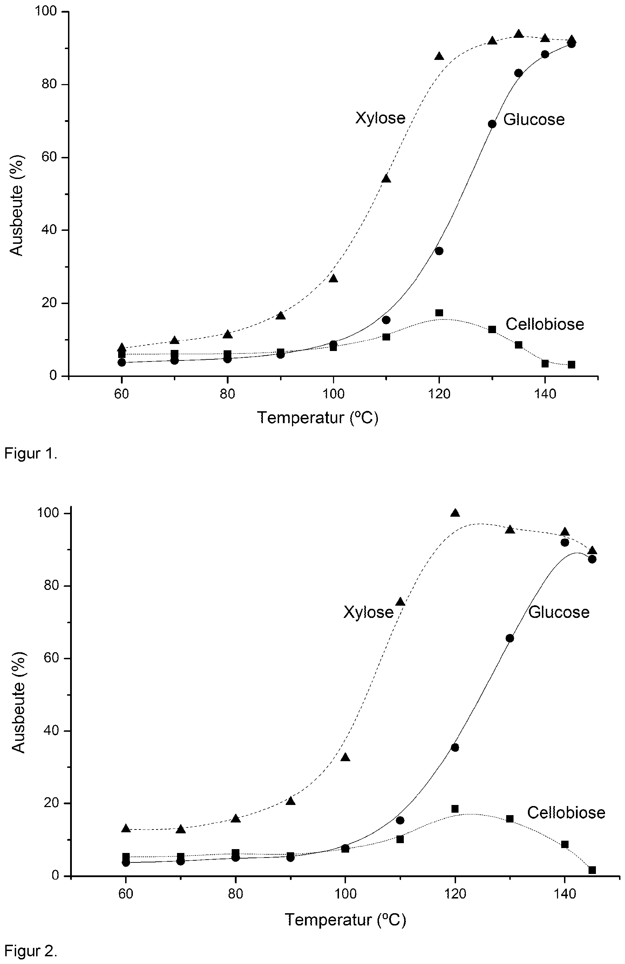

Figur 1 die Ausbeuten von Cellobiose, Glucose und Xylose nach der Hydrolyse bei verschiedenen Temperaturen von mechanisch behandeltem säureimprägniertem Buchenholz.
Figur 2 die Ausbeuten von Cellobiose, Glucose und Xylose nach der Hydrolyse bei verschiedenen Temperaturen von mechanisch behandeltem säureimprägniertem Zuckerrohr-Bagasse.

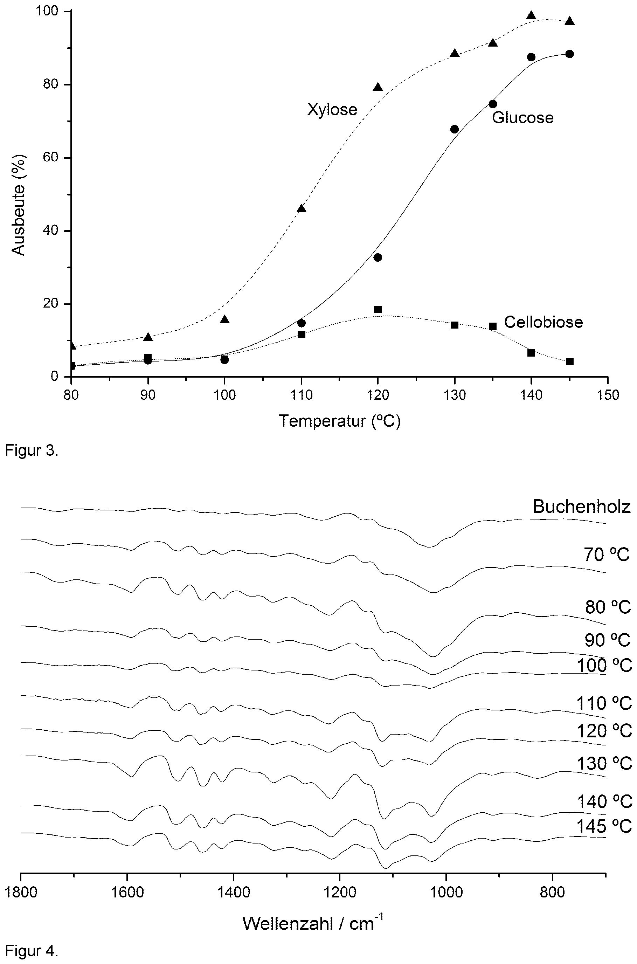

Figur 3 die Ausbeuten von Cellobiose, Glucose und Xylose nach der Hydrolyse bei verschiedenen Temperaturen von mechanisch behandeltem säureimprägniertem Kiefernholz.
Figur 4 die IR-Analyse der Niederschläge aus der einstündigen Hydrolyse von mechanisch behandeltem, säureimprägnierten Buchenholz.
Figur 5 den Kohlenstoffanteil der Niederschläge nach einstündiger Hydrolyse bei unterschiedlichen Temperaturen.
Figur 6 die Niederschläge nach einstündiger Hydrolyse bei unterschiedlichen Temperaturen.
Figur 7 die IR-Analyse der Niederschläge aus der einstündigen Hydrolyse von gemahlenen, säureimprägnierten Lignocellulosen, sowie Organosolv-Lignin aus Buchenholz und unbehandelter α-Cellulose.
Figur 8 die IR-Analyse der Niederschläge aus der einstündigen Hydrolyse von mechanisch behandelter, säureimprägnierten Zuckerrohr-Bagasse.

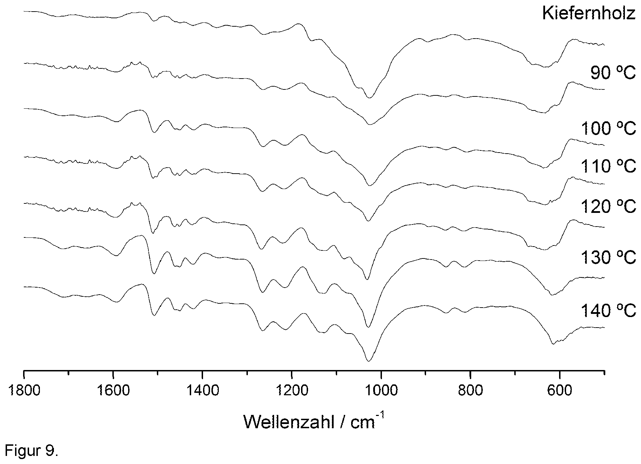

Figur 9 die IR-Analyse der Niederschläge aus der einstündigen Hydrolyse von mechanisch behandeltem, säureimprägniertem Kiefernholz.

## Patentansprüche

1. Verfahren zum Aufschluss lignocellulosischer Biomasse, bei dem in einem ersten Schritt lignocellulosehaltige Ausgangsmaterialien mit einer Säure in flüssiger oder gasförmiger Phase getränkt oder imprägniert werden, die mit Säure belegten und vorzugsweise getrockneten Ausgangsmaterialien in einem zweiten Schritt unter Einwirkung von mechanischer Energie in Kontakt gebracht werden, wobei die mechanische Behandlung mindestens solange durchgeführt wird, bis die Abbau-oder Spaltprodukte des lignocellulosischen Materials zu mehr als 60 Gew.-%, bezogen auf das eingesetzte lignocellulosische Material wasserlöslich sind, und in einem dritten Schritt der Aufschlussrückstand in Wasser, in einem mit Wasser mischbaren Lösungsmittel oder Mischungen davon aufgenommen wird, die erhaltene Dispersion/Lösung, vorzugsweise auf eine Temperatur vom mehr als 40°C, über einen Zeitraum von bis zu 24 Stunden erhitzt wird.

2. Verfahren nach Anspruch 1, **dadurch gekennzeichnet**, das den zusätzlichen Schritt umfasst, dass die Dispersion/Lösung nach dem Erhitzen in wasserlösliche Anteile und wasserunlösliche Anteile aufgetrennt wird.

3. Verfahren nach Anspruch 1 oder 2, **dadurch gekennzeichnet, dass** die Säure einen pKs-Wert von -14 bis 2 hat.

4. Verfahren nach einem der Ansprüche 1 bis 3, bei dem die Tränkung mit einer Lösung einer Säure in einer flüssigen Phase durchgeführt wird und nach einer Einwirkungszeit das Lösungsmittel abgetrennt wird.

5. Verfahren nach einem der Ansprüche 1 bis 3, bei dem die Tränkung mit einer Säure in der gasförmigen Phase durchgeführt wird.

6. Verfahren nach einem der Ansprüche 1 bis 5, bei dem die Säure in einer katalytischen Menge, bevorzugt einer Menge von 0,0001 bis 1 mmol, besonders 0,001 bis 1 mmol, ganz besonders 0,01 bis 1 mmol pro g lignocellulosischen Materials eingesetzt wird.

7. Verfahren nach einem der Ansprüche 1 bis 6, **dadurch gekennzeichnet, dass** die mechanische Behandlung eine Zerkleinerung des Mahlgutes durch Mahlen Extrudieren, Kneten und/oder eine Beaufschlagung mit mechanischen Wellen hoher Energie umfasst.

8. Verfahren nach Anspruch 7, **dadurch gekennzeichnet, dass** das Mahlgut in einer Mühle, bevorzugt unter Verwendung von Mahlkörpern oder Ultraschall, zerkleinert wird.

9. Verfahren nach einem der vorhergehenden Ansprüche, bei dem das nach der mechanischen Behandlung erhaltene Material einem Verfahrensschritt zur Neutralisierung der Säure unterworfen wird.

10. Verfahren nach einem der vorhergehenden Ansprüche, bei dem der Aufschlussrückstand in Wasser oder in einem mit Wasser mischbaren Lösungsmittel aufgenommen, die erhaltene wasserhaltige Lösung erhitzt wird, und der ausgefallene unlösliche Rückstand abgetrennt wird.

11. Verfahren nach Anspruch 10, bei dem die erhaltene wasserhaltige Lösung auf eine Temperatur von mehr als 60°C, besonders mehr als 80°C, ganz besonders mehr als 100°C, und bis zu 200°C über einem Zeitraum von 0,005 bis 24 Stunden erhitzt wird.

## Claims

1. A process for digesting lignocellulosic biomass in which, in a first step, lignocellulosic starting materials are infiltrated with or impregnated with an acid in the liquid or gaseous phase, in a second step, the starting materials which have been loaded and preferably dried are brought into contact under the action of mechanical energy, wherein the mechanical treatment is carried out for at least the length of time required for more than 60% by weight of the degradation or decomposition products of the lignocellulosic material with respect to the lignocellulosic material used to be water-soluble, and in a third step, the digestion residue is taken up in water, in a solvent which is miscible with water or in mixtures thereof, the dispersion/solution obtained preferably being heated to a temperature of more than 40°C over a period of up to 24 hours.

2. The process as claimed in claim 1, **characterized in that** it comprises the additional step in which after heating, the dispersion/solution is separated into water-soluble fractions and water-insoluble fractions.

3. The process as claimed in claim 1 or claim 2, **characterized in that** the acid has a pKa of -14 to 2.

4. The process as claimed in one of claims 1 to 3, in which the infiltration is carried out with a solution of an acid in a liquid phase and the solvent is separated out after an exposure period.

5. The process as claimed in one of claims 1 to 3, in which the infiltration is carried out with an acid in the gaseous phase.

6. The process as claimed in one of claims 1 to 5, in which the acid is used in a catalytic quantity, preferably a quantity of 0.0001 to 1 mmol, in particular 0.001 to 1 mmol, more particularly 0.01 to 1 mmol per g of lignocellulosic material.

7. The process as claimed in one of claims 1 to 6, **characterized in that** the mechanical treatment is a comminution of the milled material by milling, extruding, kneading and/or bombardment with high energy mechanical waves.

8. The process as claimed in claim 7, **characterized in that** the milled material is comminuted in a mill, preferably using milling bodies or ultrasound.

9. The process as claimed in one of the preceding claims, in which the material obtained after mechanical treatment undergoes a process step for neutralization of the acid.

10. The process as claimed in one of the preceding claims, in which the digestion residue is taken up in water or in a solvent which is miscible with water, the aqueous solution obtained is heated, and the precipitated insoluble residue is separated out.

11. The process as claimed in claim 10, in which the aqueous solution obtained is heated to a temperature of more than 60°C, in particular more than 80°C, more particularly more than 100°C, and up to 200°C over a time period of 0.005 to 24 hours.

## Revendications

1. Procédé destiné à décomposer une biomasse lignocellulosique, lors duquel dans une première étape, on imbibe ou on imprègne une matière de départ contenant de la biocellulose avec un acide en phase liquide ou gazeuse, dans une deuxième étape, on met en contact les matières de départ garnies d'acide et de préférence séchées sous l'effet d'une énergie mécanique, le traitement mécanique étant réalisé au moins jusqu'à ce que les produits de la décomposition ou de la fission de la matière lignocellulosique soient hydrosolubles à plus 60 % en poids, en rapport à la matière lignocellulosique mise en oeuvre, et dans une troisième étape, on recueille le reste de la décomposition dans de l'eau, dans un solvant miscible à l'eau ou dans des mélanges de ces derniers, on fait chauffer la dispersion/solution obtenue à une température de plus de 40°C, sur une période de jusqu'à 24 heures.

2. Procédé selon la revendication 1, **caractérisé en ce que** l'étape supplémentaire comprend qu'après avoir l'avoir fait chauffer, on sépare la dispersion/solution en des parts hydrosolubles et des parts non hydrosolubles.

3. Procédé selon la revendication 1 ou la revendication 2, **caractérisé en ce que** l'acidité présente une valeur pKs de14 à 2.

4. Procédé selon l'une quelconque des revendications 1 à 3, lors duquel on procède à l'imbibition avec une solution d'un acide dans une phase liquide et après un temps d'action, on sépare le solvant.

5. Procédé selon l'une quelconque des revendications 1 à 3, lors duquel on procède à l'imbibition avec un acide dans une phase gazeuse.

6. Procédé selon l'une quelconque des revendications 1 à 5, lors duquel on met en oeuvre l'acide dans une quantité catalytique, de préférence une quantité de 0,0001 à 1 mmole, particulièrement de 0,001 à 1 mmole, tout particulièrement de 0,01 à 1 mmole par g de la matière lignocellulosique.

7. Procédé selon l'une quelconque des revendications 1 à 6, **caractérisé en ce que** le traitement mécanique comprend un fractionnement du produit à broyer par broyage, extrusion, malaxage et/ou par exposition à des ondes mécaniques de haute énergie.

8. Procédé selon la revendication 7, **caractérisé en ce qu'**on fractionne le produit à broyer dans un moulin, de préférence en utilisant des éléments broyeurs ou des ultrasons.

9. Procédé selon l'une quelconque des revendications précédentes, lors duquel on soumet la matière obtenue après le traitement mécanique à une étape de procédé destinée à neutraliser l'acide.

10. Procédé selon l'une quelconque des revendications précédentes, lors duquel on recueille le reste de la décomposition dans de l'eau ou dans un solvant miscible à l'eau, on fait chauffer la solution obtenue contenant de l'eau et on sépare le reste insoluble sédimenté.

11. Procédé selon la revendication 10, lors duquel on fait chauffer la solution obtenue contenant de l'eau à une température de plus de 60°C, particulièrement de plus de 80°C, de manière toute particulière de plus de 100°C et jusqu'à 200°C sur une période de 0,005 à 24 heures.
